# EUROPEAN PATENT APPLICATION

(11) **EP 3 073 386 A1**
(43) Date of publication of application: **28.09.2016**
(21) Application number: 15275088.1
(22) Date of filing: 27.03.2015
(51) Int. Cl.: G06F 12/12

(54) **INTELLIGENT CACHING**

(71) Applicant: BRITISH TELECOMMUNICATIONS public limited company, London EC1A 7AJ (GB)
(72) Inventor: The designation of the inventor has not yet been filed
(74) Representative: Lau, Chi-Fai

(57) **Abstract**

Examples of the invention present an optimised method of managing a cache, where data items, such as video clips, are moved up in rank in a cache whenever it is requested, swapping rank with the data item above it. New data items not present in the cache are obtained and stored in the cache with a rank below the lowest ranked data item. If the cache is full, then the data item at the lowest rank is replaced by the newly requested data item. Thus data items that receive increasing numbers of requests are moved up the cache and thus have more protection from deletion.

## Description

### Field of the Invention

This invention relates to managing of a storage cache, in particular for managing a media cache in a video delivery network.

### Background to the Invention

Delivery of video content over IP networks is becoming more common, as both video on demand and TV catch-up services increase in popularity. The result is an ever increasing strain on the delivery network. Caching technologies can be used to reduce traffic strain in networks, by using algorithms to select items of content for storage at caching/proxy nodes. Caching nodes are typically located between the clients requesting content and a content server that publishes the original content. Item flow is monitored at the caching node, and items are selected by a caching algorithm to be stored at the caching node. If items requested by a client are stored in the cache, then the items will be sent from the caching node to the client. If items are not in the cache, then the items can be requested from the content server, and sent onto the requesting client. This technique reduces the number of items required to be sent from the content server, and thus reduces the traffic within the delivery network. Caching also reduces server load and reduces latency.

The following are examples of some commonly used caching algorithms: Least Recently Used (LRU), Least Frequently Used (LFU), and First-in, First-out (FIFO).

The Least Recently Used (LRU) algorithm retains items which have most recently been requested. LRU discards the least recently requested items when the total number of cached items exceeds the size of the cache. If a request is received for an item which is not yet in the cache, the item will be added to the cache and flagged as the most recently added item in the cache. If an item already in the cache receives a request, that item will be flagged as the most recently added item.

The Least Frequently Used (LFU) algorithm counts the number of requests each item receives in order to distinguish how likely items are to be requested again. When an item in the cache receives a request, the count associated with that item is increased. If the cache is full, items with the lowest count are discarded to make room for new items.

The First-in, First-out (FIFO) algorithm works as a sorted list. Newly added items will be added to the top of the cache. If the cache is full, items will be discarded from the bottom of the cache. Items which receive requests while in the cache are not moved. They simply retain the current position.

"Content Caching with Bi-Level Control for Efficient IPTV Content Steaming Service" by Jong-Geun Park and Hoon Choi, The International Conference on Information Networking 2014 (ICOIN2014), 2014, 439-443, describes a caching algorithm using two LRU cache sections, effectively splitting the cache into a high and low priority cache.

"A Survey of Web Caching Schemes for the Internet" by Jia Wang, ACM SIGCOMM Computer Communication Review, 29 (1999), 36, describes some caching principles and general implementation, and includes examples of some caching algorithms.

### Summary of the Invention

It is the aim of embodiments of the present invention to provide an improved caching method.

According to one aspect of the present invention, there is provided a method of managing a cache for storing one or more data items, each item having an associated rank, said method comprising:
receiving a request for a data item; and
if the requested data item is present in the cache, then retrieving the requested data item, and swapping the rank of the requested item with the next highest ranked item, otherwise
if the requested data item is not present in the cache, then obtaining the requested data item and storing the requested data item in the cache with an associated predetermined rank.

If the requested data item is not in the cache, then the predetermined rank can be the next lowest rank than the lowest ranked data item in the cache.

If the requested data item is not in the cache and the cache is already full, then the predetermined rank can be the lowest rank of the cache, and the previously stored data item at the lowest rank can be removed from the cache.

The data item previously at the predetermined rank, and any items ranked lower than the data item previously at the predetermined rank, may each be moved to the next rank lower than their respective previous rank.

If the cache is already full, then the data item in the cache previously having the lowest rank can be removed from the cache.

If the requested data item is in the cache and has the highest ranking, then the data item can be kept at the same rank.

The proposed caching method was developed to perform well when the request rates of all requested items follow a Zipf-like distribution. The method observes requested items and selects them through a unique method to be stored in a cache and made available for clients to request. The method has been found to work extremely well when cache size is kept relatively small.

The method provides a caching solution that requires little to no maintenance in order to function correctly and efficiently.

In contrast, LRU and FIFO caching algorithms work on the basis that when an item is requested it is presumed likely to be requested again soon after. Even if an item is newly introduced to the cache it is flagged as being the most recently requested item and therefore will be held in the cache for an extended period of time. Examples of the present method invest importance in an item as it receives an increasing amount of requests. When an item is first introduced into the cache, it will be the item in the cache most likely to be deleted as it has only received a single request and thus is effectively at the bottom of the cache. Only when the item receives additional requests will it move up in rank up the cache, with each request switching the requested item with the item above it in rank. This process makes an item more likely to exist in the cache for an extended period of time with each request received.

LFU records the amount of requests items receive to determine what items are to be retained in the cache. LFU evicts the items with the lowest count to make space for new items. Examples of the present method do not record how many times an item is requested, but invests importance on a more present basis. The methods swap the requested item with the item currently above it regardless of how many requests the item above the requested item may have received previously. This results in a quicker shift in items. Items which experience a fast decrease in requests are not held in the cache based on the previously experienced requests as would be the case in LFU, and may therefore be evicted from the cache much quicker.

According to another aspect of the present invention, there is provided a cache node for storing one or more data items, each item having an associated rank, said cache node comprising:
a cache;
a processor configured to receive a request for a data item, and if the requested data item is present in the cache, then retrieving the requested data item, and swapping the rank of the requested item with the next highest ranked item, otherwise if the requested data item is not present in the cache, then obtaining the requested data item and storing the requested data item in the cache with an associated predetermined rank.

### Brief Description of the Drawings

For a better understanding of the present invention reference will now be made by way of example only to the accompanying drawings, in which:
Figure 1 is a network diagram in an example of the present invention;
Figure 2 is a block diagram showing an example of a cache module in an example of the present invention;
Figure 3 is a flow chart summarising the main steps of an example of the invention;
Figure 4 is an example of a sequence of content items populating a cache module;
Figure 5 is an example of an index table showing ranked items;
Figure 6 is an example of an index table and a corresponding cache;
Figure 7 is an example of a two-tiered index and a corresponding cache for the upper index.

### Description of Preferred Embodiments

The present invention is described herein with reference to particular examples. The invention is not, however, limited to such examples.

Examples of the present invention present an optimised method of managing a cache, where data items, such as video clips, are moved up in rank in a cache whenever it is requested, swapping rank with the data item above it. New data items not present in the cache are obtained and stored in the cache with a rank below the lowest ranked data item. If the cache is full, then the data item at the lowest rank is replaced by the newly requested data item. Thus data items that receive increasing numbers of requests are moved up the cache and thus have more protection from deletion.

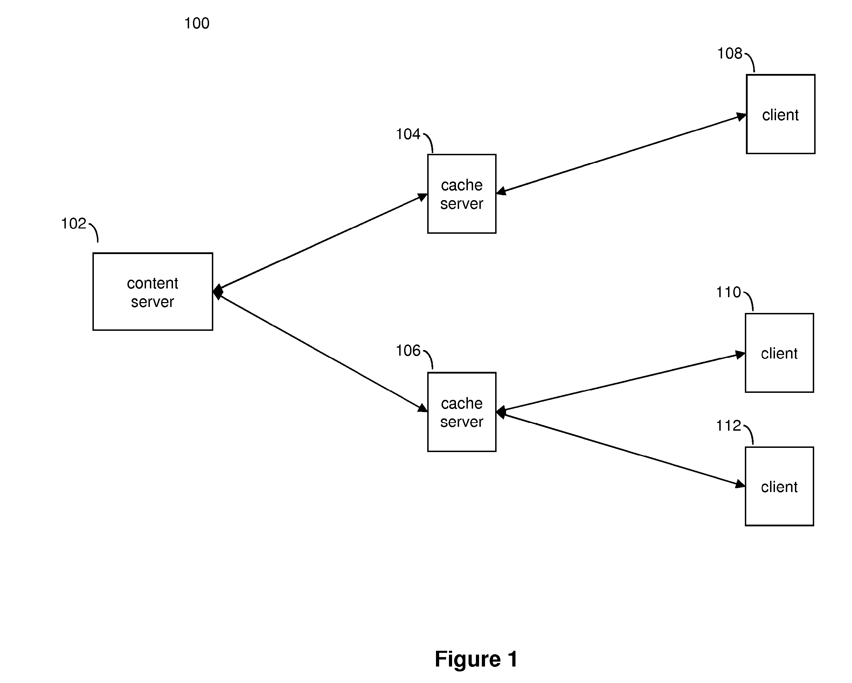

Figure 1 shows a network 100 comprising a content server 102, cache nodes 104 and 106, and clients 108, 110 and 112. The content server 102 is a source of content, such as video sequences or other media. The clients 108, 110 and 112, are for example PCs, smartphones, set-top boxes, or similar. The clients are connected to the cache nodes over a suitable network connection operating according to an Internet protocol. The clients make requests for items of video or other data from the content server 102. For example, if the client is a set-top box, then the request may be for a TV show or film. The requests are processed by one of the cache node 104 or 106. The cache node include storage means (caches), which are managed in accordance with examples of the invention to store selected items provided by the content server 102. If a requested item is stored locally at the cache node processing the request, then the cache node can send the item directly back to the requesting client. However, if the cache node does not have a copy of the requested item stored, then the item is requested first from the content server, before storing a copy at the cache node and sending the item to the requesting client.

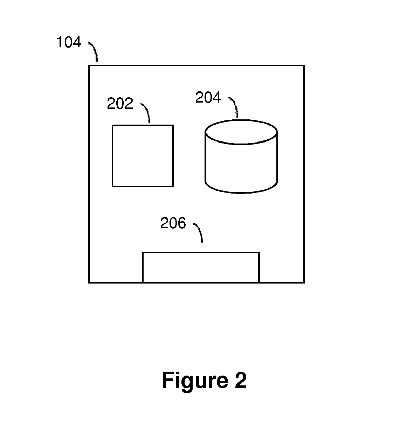

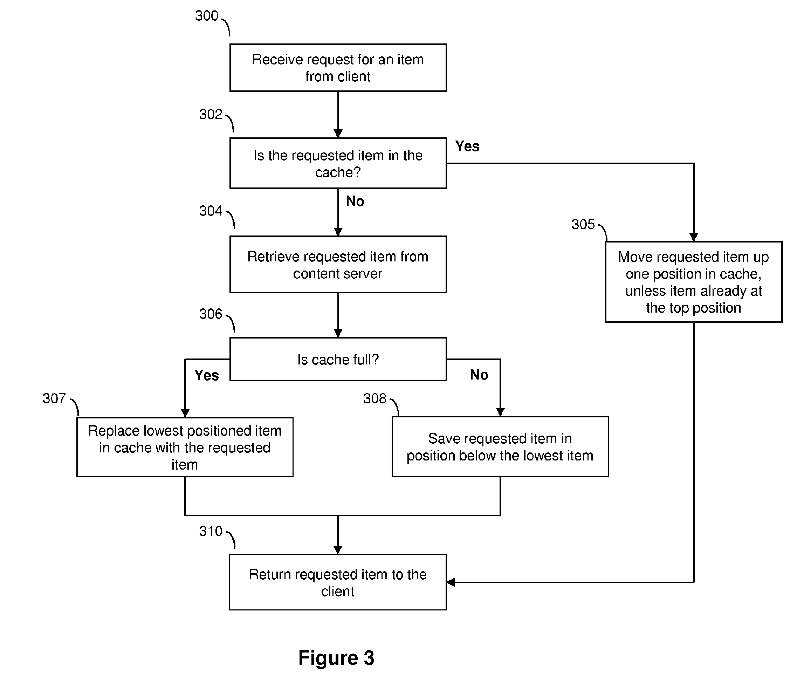

Figure 2 shows one of the cache nodes 104 in more detail. The cache node 104 comprises a network interface 206, a processor 202, and storage means 204. The network interface 206 connects the cache node 104 to the content server 102 and the clients. The storage means, or cache, 204 comprises a hard disk array or solid state storage for example, where data items such as video can be stored. The size of the cache 204 available for storing data items can be varied but will be finite. Thus, only a limited amount, and thus number of items, of video can be stored in the cache 204. The processor 202 controls the operation of the cache node 102, and is configured to manage the items stored in the cache 204 as will be described with reference to the flow chart of Figure 3 in an example of the invention.

In Figure 3, step 300, the cache node 104 receives a request for an item of video from client 108. The cache node 104 checks in step 302 to see if the requested item is in the cache 204. In this example, there are already a number of items stored in the cache 204.

If the item requested is already in stored the cache 204, then processing passes to step 305. The items stored in the cache 204 have relative positions, the purpose of which will become apparent below. In step 305, the requested data item is moved up one position in the cache, unless the requested item is already in the top position, when it will remain in the top position. When the item is moved up in the cache, the result is that the requested item is swapped with the item above it in the cache. Processing then passes to step 310, where the requested item is returned to the client 108.

If in step 302 the requested item is not in the cache 204, the processing passes to step 304. In step 304, the cache node 104 retrieves the requested item from the content server 102, and receives the requested item. In step 306, a check is made to determine if the cache is full. If the cache is full, processing passes to step 307, and the item in the lowest position is replaced by the requested item (received from the content server). Thus, the item previously in the lowest position is effectively deleted. Processing then passes to step 310, where the requested item is returned to the client 108. However, if in step 306 it is determined that the cache is not full, processing passes to step 308, and the requested item is saved in the position below the item in the lowest position in the cache. For example, if there are 4 items already in the cache 204, then the requested item will be stored in position 5. Processing then passes to step 310, where the requested item is returned to the client 108.

Whilst the example described here is of a client initiating a request, it will be appreciated that the content server or some other controlling server can initiate the request in step 300. Thus in effect pre-populating or updating the cache in respect of items that the content server deems relevant.

Whilst the example refers to the cache 204 having capacity for a certain number of items, in practice, the number of items will vary and depend on the size of the items that are requested and already stored. Therefore, it is possible that a requested item not in the cache, will be retrieved and stored in the cache in the place of more than one item (at the lowest positions in the cache). Furthermore, the term "item" can include multiple physical files or items, such as a collection of video clips/programs or similar. These can be all processed as a single item using the method described so as to ensure that all the items are handled as a single entity.

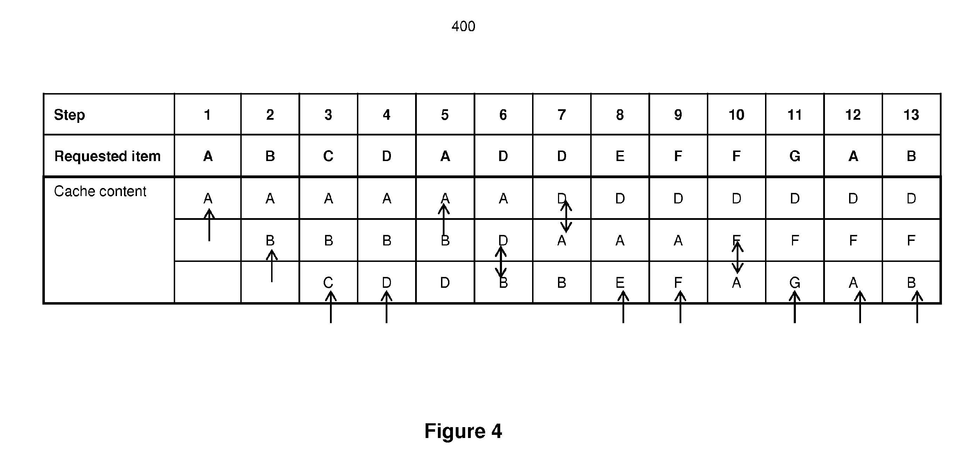

Figure 4 shows a worked example of how requested items are managed by the cache node 104 in the form of a summary table 400. In this example, the cache 204 can store up to 3 items, and initially the cache is empty (no items stored). The table 400 summarises what item is being requested at each step, and a snapshot of the resulting content of the cache after processing.

In step 1, a request for item A is received. As item A is not in the cache 204, the cache node 104 requests the item from the content server 102. When the cache node 104 receives item A, it stores item A in the cache at the top position of the cache 204. Item A is also sent to the requesting client. In step 2, a request for item B is received. As item B is not in the cache 204, the cache node 104 requests item B from the content server 102. When the cache node 104 receives item B, it stores item B in the cache 204 after the lowest positioned item already in the cache (item A in top position), which is the second position (after item A). Item B is also sent to the requesting client. In step 3, a request for item C is received. As item C is not in the cache 204, the cache node 104 requests item C from the content server 102. When the cache node 104 receives item C, it stores item C in the cache 204 after the lowest positioned item already in the cache (item B in second position), which is the third position (after item B). Item C is also sent to the requesting client.

Thus, whilst the cache 204 is not yet full, items are added from top to bottom until the cache 204 is full.

In step 4, a request for item D is received. As item D is not in the cache 204, the cache node 104 requests item D from the content server 102. When the cache node 104 receives item D, item D is stored in the lowest position in the cache, as the cache is already full, thereby replacing item C. Item D is also sent to the requesting client.

In step 5, a request for item A is received. Item A is already in the cache 204, and at in the top position, so item A remains in the same position, and a copy is sent back to the requesting client.

In step 6, a request for item D is received. Item D is already in the cache 204 in the bottom position. Item D is swapped with the item above it in the cache 204. Thus, item D moves up one position, and item B previously in second position moves down to the bottom of the cache. A copy of item D is sent back to the requesting client.

In step 7, a request for item D is received. Item D is already in the cache 204 in the second position. Item D is swapped with the item above it in the cache 204. Thus, item D moves up one position to the top position, and item A previously in the top position moves down to the second position. A copy of item D is sent back to the requesting client.

In step 8, a request for item E is received. As item E is not in the cache 204, the cache node 104 requests item E from the content server 102. When the cache node 104 receives item E, item E is stored in the lowest position in the cache, as the cache is already full, thereby replacing item B at the bottom. Item E is also sent to the requesting client.

In step 9, a request for item F is received. As item F is not in the cache 204, the cache node 104 requests item F from the content server 102. When the cache node 104 receives item F, item F is stored in the lowest position in the cache, as the cache is already full, thereby replacing item E at the bottom. Item F is also sent to the requesting client.

In step 10, a request for item F is received. Item F is already in the cache 204 in the bottom position. Item F is swapped with the item above it in the cache 204. Thus, item F moves up one position into second position, and item A previously in second position moves down to the bottom of the cache in third position. A copy of item F is sent back to the requesting client.

In step 11, a request for item G is received. As item G is not in the cache 204, the cache node 104 requests item G from the content server 102. When the cache node 104 receives item G, item G is stored in the lowest position in the cache, as the cache is already full, thereby replacing item A previously at the bottom. Item G is also sent to the requesting client.

In step 12, a request for item A is received. As item A is not in the cache 204, the cache node 104 requests item A from the content server 102. When the cache node 104 receives item A, item A is stored in the lowest position in the cache, as the cache is already full, thereby replacing item G previously at the bottom. Item A is also sent to the requesting client.

And finally, in step 13, a request for item B is received. As item B is not in the cache 204, the cache node 104 requests item B from the content server 102. When the cache node 104 receives item B, item B is stored in the lowest position in the cache, as the cache is already full, thereby replacing item A previously at the bottom. Item B is also sent to the requesting client.

Whilst the above examples have been described with the cache node 104 inserting and moving items into different positions within the cache 204, in an alternative approach, an indexing or ranking system can be used.

With an indexing system, items are still stored in the cache as described before, but the cache node 14 also maintains an index or rank for each item that is stored in the cache. The rank is updated for each item, and represents a notional "position" of that item within the cache, but the items actually stored are not physically moved within the cache. The only change to memory would be the removal and introduction of new items as required by the index.

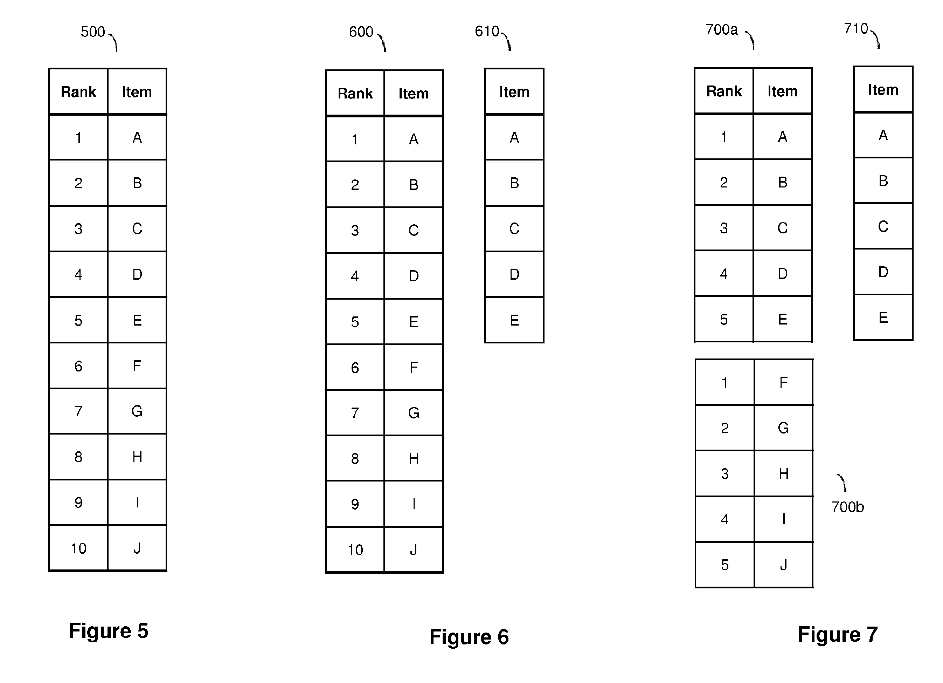

Taking Figure 4 as an example, if a ranking system is used instead, then the ranks would look very much like the "cache content". Thus, after step 8, item D would have a rank of 1, item A rank of 2 and item E a rank of 3. Then at step 9, newly requested item F would take a rank of 3, and the cache would remove item E and replace it with item F. How item F is stored in the memory is not important, as a separate rank is being associated with all the items stored. The ranks for each item can be maintained in the form of a table or index stored within the cache 204 for example. Figure 5 shows an example of an index or ranking table 500, with the first column representing the rank and the second column a reference to the item at that corresponding rank. The reference to the item can be the item name for example, or some other identifier, such as a hash of the item name. The physical item is not stored in the index.

With an indexing system, the size of the index could also exceed the size of the cache. Thus, introduction of new items are first to the index only, and only when the item rank exceeds a predetermined rank, would items be introduced to the cache. That predetermined rank can be the rank of the lowest item in the cache.

Figure 6 shows an example of such an index 600, as well as a corresponding cache 610 with items stored within it. The index 600 here has 10 positions or ranks. The cache 610 has capacity for 5 items. To illustrate, if a request for item J is received, it is only moved up the index from rank 10 to 9 (effectively swapping position with I). As the cache 610 does not cover items down to rank 9, item J is not stored in the cache 610, and only the index 600 is updated. However, if item F is requested, then it is moved up in rank from rank 6 to 5 in the index 600, with item E previously at rank 5 dropping down to rank 6. As the cache 610 covers items down to rank 5 in the index, item E is deleted from the cache 610 and item F is stored in its place.

An index that is larger than the cache can also be viewed as being made up of two smaller indexes - an upper and a lower index, with the upper index corresponding to the cache. Only when requests are made for an item at the top of the lower will it move out of the lower index and effectively form a request into the upper index, and be processed as described in Figures 3 and 4 into the upper index. To illustrate, Figure 7 shows an example of a split index comprising an upper index 700a and a lower index 700b. In this arrangement, if a request is made for item J, as J is in the lower index 700b, J will be moved up in rank to rank 4, swapping with item I. There is no change to the cache 710, as there is no change to the upper index 700a. However, if a request for item F is made, then item F is already at the top of index 700b. Thus item F is moved out of index 700b from rank 1, and form a request processed into the upper index 700a. Item F thus replaces the lowest ranked item in the upper index 700a, which is item E. Item E drops down to the top ranked item in the lower index 700b. Thus, items E and F are swapped as in the example described in relation to Figure 6. As item E has been removed from index 700a and replaced by item F, so the cache 710 is also updated by deleting item E and replacing it with item F. As such, the items stored in the cache correspond to the items listed in the upper index 700a.

In an alternative example, new items that are to be stored in the cache are not added at the lowest position in the cache, or given the lowest rank in the index, as described above but can be inserted at some predetermined insertion point (position or rank). Thus, the item previously at the predetermined position or rank and any other items below that are pushed down to the next lowest rank, with the lowest ranked item/items deleted from the cache if the cache exceeds its capacity.

The item insertion point may be at any place in the index and may result in a direct change to the cache if the insertion point is a location within the index that correlates directly to a cache entry.

The cache node may be located in a network, as a standalone server. Alternatively, the cache node may be provisioned as part of some other entity in the network, or can even form part of a customer gateway or router within a customer premises (and thus much closer to the client).

The above methods of managing a cache can also be combined with other caching algorithms. For example, in the two-tiered index arrangement of Figure 7, the lower index could operate according to a different caching algorithm.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method of managing a cache for storing one or more data items, each item having an associated rank, said method comprising:
receiving a request for a data item; and
if the requested data item is present in the cache, then retrieving the requested data item, and swapping the rank of the requested item with the next highest ranked item,
if the requested data item is not present in the cache, then obtaining the requested data item and storing the requested data item in the cache with an associated predetermined rank.

2. A method according to clam 1, wherein if the requested data item is not in the cache, then the predetermined rank is the next lowest rank than the lowest ranked data item in the cache.

3. A method according to claim 1, wherein if the requested data item is not in the cache and the cache is already full, then the predetermined rank is the lowest rank of the cache, and the previously stored data item at the lowest rank is removed from the cache.

4. A method according to claim 1, wherein the data item previously at the predetermined rank, and any items ranked lower than the data item previously at the predetermined rank, are each moved to the next rank lower than their respective previous rank.

5. A method according to claim 4, wherein if the cache is already full, then the data item in the cache previously having the lowest rank is removed from the cache.

6. A method according to any previous claim, wherein if the requested data item is in the cache and has the highest ranking, then keeping the data item at the same rank.

7. A cache node for storing one or more data items, each item having an associated rank, said cache node comprising:
a cache;
a processor configured to receive a request for a data item, and if the requested data item is present in the cache, then retrieving the requested data item, and swapping the rank of the requested item with the next highest ranked item, if the requested data item is not present in the cache, then obtaining the requested data item and storing the requested data item in the cache with an associated predetermined rank.
